(19) Europäisches Patentamt

European Patent Office

Office européen des brevets

(11) **EP 0 508 547 B1**

(12) **EUROPÄISCHE PATENTSCHRIFT**

(45) Veröffentlichungstag und Bekanntmachung des Hinweises auf die Patenterteilung:
**26.08.1998 Patentblatt 1998/35**

(51) Int Cl.6: **G10L 7/04**, G10L 7/08, G10L 5/06, G10L 9/06

(21) Anmeldenummer: **92201023.6**

(22) Anmeldetag: **09.04.1992**

(54) **Schaltungsanordnung zur Spracherkennung**

Circuit for speech recognition

Dispositif de circuit et reconnaissance de langage

(84) Benannte Vertragsstaaten:
**DE FR GB**

(30) Priorität: **12.04.1991 DE 4111995**

(43) Veröffentlichungstag der Anmeldung:
**14.10.1992 Patentblatt 1992/42**

(73) Patentinhaber:
- **Philips Patentverwaltung GmbH**
  **22335 Hamburg (DE)**
  Benannte Vertragsstaaten:
  **DE**
- **Koninklijke Philips Electronics N.V.**
  **5621 BA Eindhoven (NL)**
  Benannte Vertragsstaaten:
  **FR GB**

(72) Erfinder:
- **Meyer, Peter, Dr.**
  **W-8510 Fürth (DE)**
- **Rühl, Hans-Wilhelm, Dr.**
  **W-8501 Schwaig (DE)**

(74) Vertreter: **Volmer, Georg, Dipl.-Ing. et al**
**Philips Patentverwaltung GmbH,**
**Röntgenstrasse 24**
**22335 Hamburg (DE)**

(56) Entgegenhaltungen:
EP-A- 0 033 412          DE-A- 2 448 909
DE-A- 3 639 756

**Beschreibung**

Die Erfindung betrifft eine Schaltungsanordnung zur Spracherkennung mit einer Auswerteschaltung zur Ermittlung von spektralen Merkmalsvektoren von Zeitrahmen eines digitalen Sprachsignals mittels einer Spektralanalyse, zur Logarithmierung der spektralen Merkmalsvektoren und zum Vergleich der logarithmierten spektralen Merkmalsvektoren mit Referenz-Merkmalsvektoren.

Sprecherabhängige Spracherkennungseinrichtungen werden in vielen Bereichen erfolgreich eingesetzt, so z.B. in Systemen, die gesprochenen Text erkennen, verstehen und in eine Handlung umsetzen (akustisch gegebene Befehle zur Steuerung von Geräten), wobei das zu erkennende Sprachsignal oftmals zusätzlich über eine Telefonleitung (Fernwirken über Telefon) übertragen wird.

In dem Buch "Automatische Spracheingabe und Sprachausgabe" von K. Sickert, Haar bei München, Verlag Markt und Technik, 1983, Seiten 223-230 und 322-326 wird der prinzipielle Aufbau einer Spracherkennnungseinrichtung beschrieben, bei der das Sprachsignal zunächst analysiert wird, um die informationstragenden Merkmale zu extrahieren. Diese Merkmale werden durch sogenannte Merkmalsvektoren repräsentiert, die mit den in einem Referenzspeicher abgelegten, während einer Lernphase ermittelten Referenz-Merkmalsvektoren in einer Erkennungseinheit verglichen werden.

Aus der Veröffentlichung "Verfahren für Freisprechen, Spracherkennung und Sprachcodierung in der SPS51" von W. Armbrüster, S. Dobler und P. Meyer, PKI Technische Mitteilungen 1/1990, Seiten 35-41 ist eine technische Realisierung einer sprecherabhängigen Spracherkennungseinrichtung bekannt. In dieser Spracherkennungseinrichtung werden bei einer Analyse eines digitalen Sprachsignals der zeitliche Verlauf dieses Signals im Spektralbereich betrachtet und spektrale Merkmalsvektoren ermittelt, die zur Beschreibung der charakteristischen Merkmale des Sprachsignals geeignet sind. In einer Lern- bzw. Trainingsphase, im weiteren als Training bezeichnet, wird jedes zu erkennende Wort mehrmals aufgenommen. Dabei werden jeweils spektrale Merkmalsvektoren ermittelt, woraus durch Mittelung wortspezifische Referenz-Merkmalsvektoren erzeugt werden. Nach Abschluß des Trainings stehen für jedes trainierte Wort Referenz-Merkmalsvektoren, die in einem Referenzmusterspeicher abgelegt sind, zur Verfügung. Im Normalbetrieb, der Testphase, werden für ein zu erkennendes Sprachsignal die spektralen Merkmalsvektoren bestimmt und einer Erkennungseinheit zugeführt, in der ein Vergleich mit den abgespeicherten Referenz-Merkmalsvektoren mittels eines auf der dynamischen Programmierung basierenden Verfahren stattfindet.

Aus der Offenlegungsschrift DE 36 39 756 A1 ist eine Stimmspektrumsanalyseeinrichtung und -verfahren bekannt. Dieses Stimmdatenverarbeitungssystem bezieht sich speziell auf ein System zur Extraktion lokaler Spitzen als Stimmerkmale aus einem Stimmenzeitspektrum in Form eines Frequenzverteilungsmusters, das bei einer Stimmerkennungstechnik entwickelt wird. Dabei wird ein Stimmsignal, das eine relativ niedrigfrequente Komponente und eine relativ hochfrequente Komponente aufweist, periodisch mit einem vorbestimmten Zeitintervall über einen vorbestimmten Frequenzbereich abgetastet, wodurch eine Serie von abgetasteten Stimmdaten erzeugt wird, die man dann durch ein Hochpaßfilter laufen läßt, um die relativ hochfrequenten Komponenten als ein Quantitätsmerkmal des Stimmsignals zu extrahieren. Das Stimmsignal wird periodisch einer Frequenzanalyse mit einem vorbestimmten Zeitintervall unterworfen, so daß periodisch ein Satz von Daten (Rahmen) erzeugt wird, der eine Frequenzspektralverteilung aufweist. Aus dem annähernd periodischen Signal von Stimmustern, die den zu einem bestimmten Zeitpunkt abgetasteten Rahmen entsprechen, wird dann eine hochfrequente Komponente extrahiert. In einer Ausführungsform, bei der die Serie von Stimmustern in Digitaldaten umgewandelt wurde, kann dazu insbesondere ein digitales Hochpaßfilter verwendet werden. Dabei werden allerdings in jedem Fall lineare analoge Ausgangssignale der Filterbank, die die Frequenzanalyse ausführt, ohne weitere Verarbeitung hochpaßgefiltert. Insgesamt soll mit dem Gegenstand der Entgegenhaltung ein Näherungsverfahren zum Extrahieren von Merkmalsdaten aus einem Stimmsignal zur Verwendung bei einem Stimmerkennungssystem angegeben werden. Daher handelt es sich um ein Verfahren und System zum Erkennen von Stimmen unterschiedlicher Sprecher. Mit einem solchen Verfahren/System zur Betonung sprecherspezifischer Stimmeigenschaften werden jedoch sprachspezifische Eigenschaften unterdrückt.

Probleme bei der Erzielung eines zuverlässigen Erkennungsergebnisses ergeben sich vor allem durch die Überlagerung des Sprachsignals mit Störgrößen, wie z. B. Verzerrungen des Frequenzganges oder quasistationäre Störgeräusche. Solche Störgrößen werden überwiegend bei der Übertragung des Signals über eine Telefonleitung und/ oder durch Hintergrundrauschen bei der Aufnahme eingestreut. Zudem verschlechtern sich die Erkennungsergebnisse, wenn die Ermittlung von Referenz-Merkmalsvektoren während des Trainings unter anderen Aufnahmebedingungen als die Ermittlung von Merkmalsvektoren während der Testphase erfolgt. In diesem Fall kann die Erkennungseinheit den Vergleich zwischen Merkmalsvektoren und Referenz-Merkmalsvektoren nicht mehr zuverlässig vornehmen, woraus eine Erhöhung der Fehlerrate bei der Erkennung resultiert.

Darüber hinaus werden die Einsatzmöglichkeiten von Spracherkennungseinrichtungen vor allem dadurch eingeengt, daß die Mehrzahl der bisherigen technischen Realisierungen lediglich zur sprecherabhängigen Spracherkennung, die ein Training durch den jeweiligen Benutzer impliziert, geeignet sind. Ein Einsatz von solchen sprecherabhängigen Spracherkennungseinrichtungen in Systemen, in denen der gesprochene Text von häufig wechselnden Benutzern erkannt und/oder beantwortet werden soll (z.B. vollautomatische Auskunftssysteme mit sprachlichem Dialog) ist nur schlecht möglich.

Die Aufgabe der vorliegenden Erfindung ist es deshalb, eine Schaltungsanordnung zur Spracherkennung der eingangs genannten Art so zu verbessern, daß eine sprecherunabhängige Erkennung ermöglicht und der Einfluß von Störgrößen auf das Erkennungsergebnis vermindert wird.

Die Aufgabe wird erfindungsgemäß dadurch gelöst, daß vor dem Vergleich mit den Referenz-Merkmalsvektoren in der Auswerteschaltung eine rekursive Hochpaßfilterung der spektralen Merkmalsvektoren durch Berechnung hochpaßgefilterter spektraler Merkmalsvektoren M(n, i) gemäß der Vorschrift

$$M(n, i) = V(n, i) - V(n-1, i) + C \cdot M(n-1, i)$$

vorgesehen ist, wobei V(n, i) die ungefilterten spektralen Merkmalsvektoren, n einen Zeitrahmen, i eine spektrale Komponente eines spektralen Merkmalsvektors M bzw. V und C eine vorgegebene Konstante bezeichnet.

Die spektralen Merkmalsvektoren enthalten eine Zahl von Komponenten, die während einer Merkmalsextraktion durch zahlreiche Verarbeitungsschritte ermittelt werden. Hierbei werden die Komponenten unter anderem einer Logarithmierung unterworfen. Stationäre oder langsam veränderliche Störungen bzw. Änderungen des Frequenzganges, die während der Aufnahme oder der Übertragung des Sprachsignals dem zu erkennenden Sprachsignal überlagert wurden, führen in den logarithmierten Komponenten der Merkmalsvektoren zu additiven Termen, die durch eine Hochpaßfilterung der Komponenten der spektralen Merkmalsvektoren unterdrückt werden. Daneben wird durch den Einsatz einer rekursiven Hochpaßfilterung eine erhebliche Verbesserung der Sprecherunabhängigkeit der Spracherkennung erzielt. Die Schaltungsanordnung zur Spracherkennung muß im Normalfall nur noch einmal trainiert werden und ist anschließend in der Lage, Sprachsignale auch dann zu erkennen, wenn sie von Personen gesprochen werden, die die Schaltungsanordnung zur Spracherkennung nicht trainiert haben. Hierdurch wird ein enormes Anwendungsspektrum für die erfindungsgemäße Schaltungsanordnung zur Spracherkennung eröffnet. Sie kann z.B. zur Realisierung eines Telefonauskunftsystems mit sprachlichem Dialog oder zur Steuerung von Geräten mittels Spracheingabe eingesetzt werden, wobei das Training der Schaltungsanordnung zur Spracherkennung bereits vom Hersteller vorgenommen werden kann und somit ein Trainieren durch den Benutzer entfällt. Darüber hinaus bewirkt die vor dem Vergleich mit Referenz-Merkmalsvektoren vorgesehene Filterung der spektralen Merkmalsvektoren mit einem rekursiven Hochpaß - selbstverständlich werden auch die zur Bestimmung der Referenz-Merkmalsvektoren ermittelten spektralen Merkmalsvektoren während der Trainigsphase dieser Filterung unterworfen - eine deutliche Reduzierung des Einflusses von stationären Störgeräuschen (z.B. durch Brummen in einer Telefonverbindung hervorgerufen) und eine verbesserte Unterdrückung von Frequenzgangverzerrungen. Es sei an dieser Stelle bemerkt, daß die Auswerteschaltung der Schaltungsanordnung zur Spracherkennung wahlweise durch einen Prozessor oder durch diskrete Bauelemente gebildet wird. Darüber hinaus können ein oder mehrere, der in der Auswerteschaltung vorgesehenen Schritte wahlweise mit diskreten Bauelementen oder als Rechnerprogramm eines Prozessors realisiert werden.

Dabei ist die rekursive Hochpaßfilterung in der Auswerteschaltung durch Berechnung hochpaßgefilterter spektraler Merkmalsvektoren M(n, i) gemäß der Vorschrift

$$M(n, i) = V(n, i) - V(n-1, i) + C \cdot M(n-1, i)$$

vorgesehen, wobei n einen Zeitrahmen, V(n, i) die ungefilterten spektralen Merkmalsvektoren des Zeitrahmens n, M(n-1, i) die spektralen Merkmalsvektoren des Zeitrahmens n - 1, i eine spektrale Komponente eines spektralen Merkmalsvektors M bzw. V und C eine vorgegebene Konstante bezeichnet. Bei einer Untersuchung von mehreren verschiedenen rekursiven und nicht rekursiven Hochpaßfilterungen hat sich gezeigt, daß die vorgeschlagene rekursive Hochpaßfilterung erster Ordnung zu den besten Erkennungsergebnissen führt. Die Güte dieser Erkennungsergebnisse hängt zudem im hohen Maße von dem für die Konstante C gewählten Wert ab. Für die Konstante C muß ein Wert im Bereich von $0 < C < 1$ gewählt werden. Da für einen Wert von C = 0 der rekursive Hochpaß zu einem Differenzierer entartet und für einen Wert C = 1 nur ein Gleichanteil der Komponenten des spektralen Merkmalsvektors unterdrückt wird, hat sich für C ein Wert von ungefähr 0,7 als vorteilhaft erwiesen, um sprecherspezifische Merkmale in den spektralen Merkmalsvektoren zu unterdrükken. Bei zu großen Abweichungen von diesem Wert verschlechtern sich die Erkennungsergebnisse deutlich.

In einer Ausgestaltung der Erfindung ist für eine in der Auswerteschaltung vorzunehmende Spektralanalyse eine Aufteilung des digitalen Sprachsignals in sich überlappende Zeitrahmen, eine nachfolgende Wichtung der Abtastwerte eines Zeitrahmens mit einem Hamming-Fenster und eine schnelle Fouriertransformation mit einer anschließenden Betragsbildung zur Ermittlung von spektralen Merkmals-vektoren vorgesehen.

Im einzelnen bedeutet dies, daß jeweils eine bestimmte Zahl von Abtastwerten des digitalen Sprachsignals zu Blökken, im weiteren als Zeitrahmen bezeichnet, zusammengefaßt wird. Jeder Abtastwert ist dabei in mehreren Zeitrahmen enthalten, d.h. die Zeitrahmen sind zeitlich versetzt und überlappen sich. Die Abtastwerte eines Zeitrahmens bilden die Grundlage für die Ermittlung eines dem Zeitrahmen zugeordneten spektralen Merkmalsvektors. Bei der Bestimmung des spektralen Merkmalsvektors werden die Abtastwerte eines Zeitrahmens mit einem Hamming-Fenster gewichtet, wie es z.B. in dem Buch "Automatische Spracheingabe und Sprachausgabe" von K. Sickert, Haar bei München, Verlag Markt und Technik, 1983, Seiten 118-119 beschrieben ist. Die Abtastwerte jedes Zeitrahmens werden im Anschluß daran einer schnellen Fourier-Transformation (FFT) unterworfen und aus dem resultierenden Spektrum wird durch eine Quadrierung und eine Betragsbildung das Leistungsdichtespektrum ermittelt. Die spektralen Werte des Leistungsdichtespektrums eines Zeitrahmens bilden die Komponenten des zugeordneten Merkmalsvektors.

Es sei hier erwähnt, daß die Bestimmung der spektralen Merkmalsvektoren alternativ durch eine Filterbank-Analyse, wie sie aus dem Buch "Automatische Spracheingabe und Sprachausgabe" von K. Sickert, Haar bei München, Verlag Markt und Technik, 1983, Seiten 129-131 bzw. Seite 324 bekannt ist, vorgenommen werden kann. Die in der Erfindung eingesetzte, auf der schnellen Fouriertransformation basierende Spektralanalyse bietet den Vorteil, daß sie im Gegensatz zur Filterbank-Analyse, auch mittels eines Programms in einem Prozessor, z.B. in einem Signalprozessor, realisierbar ist.

In einer weiteren vorteilhaften Ausgestaltung der Erfindung ist die Auswerteschaltung zur Reduzierung von Komponenten der spektralen Merkmalsvektoren durch eine Faltung mit Faltungskernen eingerichtet. Die Faltungskerne (Mittenfrequenzen) werden so gewählt, daß sie in regelmäßigen Abständen auf der sogenannten "mel"-Skala (Melodie-Kurve) der subjektiven musikalischen Tonhöhe liegen, wodurch eine Auswahl von Komponenten der spektralen Merkmalsvektoren nach psycho-akustischen Aspekten gewährleistet ist. Der Verlauf der "mel"-Skala ist z.B. aus dem Buch "Das Ohr als Nachrichtenempfänger" von E. Zwicker und R. Feldtkeller, S. Hirzel Verlag, Stuttgart, 1967 bekannt.

Die aus der Faltung resultierende Unterabtastung führt in vorteilhafter Weise zu einer erheblichen Reduzierung der Komponenten der spektralen Merkmalsvektoren und damit zu einer deutlichen Datenreduktion.

Eine weitere Ausführungsform zeichnet sich dadurch aus, daß eine in der Auswerteschaltung vorzunehmende Logarithmierung der spektralen Merkmalsvektoren bei einer auf der schnellen Fouriertransformation basierenden Spektralanalyse vor der Faltung vorgesehen ist. Hierdurch wird eine Kompandierung der Komponenten der spektralen Merkmalsvektoren erreicht, woraus eine erhebliche Reduktion der zu verarbeitenden Datenmenge resultiert.

Eine Verringerung des Einflusses von Störgrößen, die von im allgemeinen unbekannten Eigenschaften eines Übertragungsweges des Sprachsignals abhängig sind, wird in einer Ausgestaltung durch eine Intensitätsnormierung der spektralen Merkmalsvektoren erzielt. Es wird hierzu ein Mittelwert der Komponenten eines jeden spektralen Merkmalsvektors berechnet und anschließend von jeder Komponente subtrahiert. Der Mittelwert entspricht einer mittleren Energie eines spektralen Merkmalsvektors und wird deshalb als weitere Komponente eines spektralen Merkmalsvektors aufgenommen. Durch die vorgeschlagene Intensitätsnormierung wird zudem die für die Erkennung nachteilige Abhängigkeit der Komponenten von der Lautstärke des Sprachsignals annähernd beseitigt und die Leistungsfähigkeit der Spracherkennung verbessert.

Im folgenden soll anhand des in den Fig. 1 bis 3 schematisch dargestellten Ausführungsbeispiels die Erfindung näher beschrieben und erläutert werden.

Es zeigt:

Fig. 1   ein Blockschaltbild einer Schaltungsanordnung zur Spracherkennung,

Fig. 2   ein Flußablaufdiagramm der Spracherkennung, wie sie in der Auswerteschaltung der Schaltungsanordnung zur Spracherkennung vorgesehen ist.

Fig. 3   ein Flußablaufdiagramm der Merkmalsextraktion, wie sie in der Auswerteschaltung der Schaltungsanordnung zur Spracherkennung vorgesehen ist.

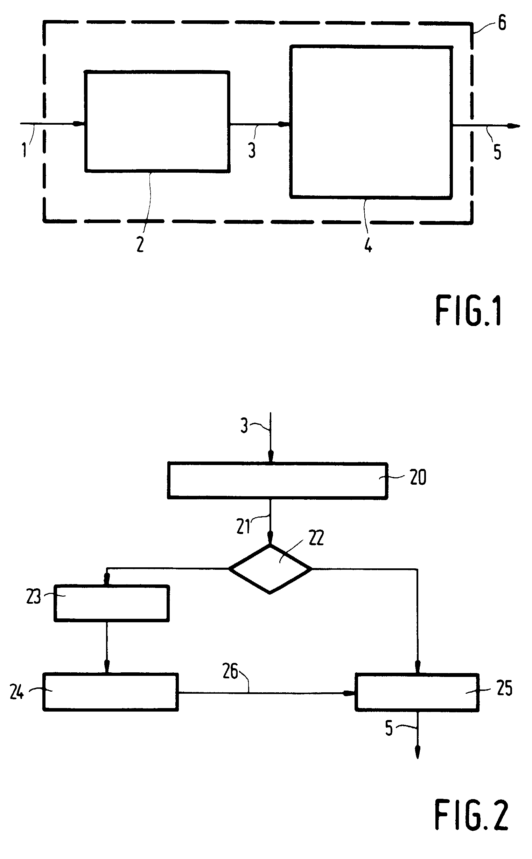

Fig. 1 zeigt den Aufbau einer Schaltungsanordnung zur Spracherkennung. Ein zu erkennendes analoges Sprachsignal 1, das beispielsweise über ein Mikrofon oder eine Telefonleitung zugeführt wird und beispielsweise im Frequenzbereich von 0,3 bis 3,4 KHz liegt, wird durch einen Analog-Digital-Wandler 2 mit einer Frequenz von 8 KHz abgetastet und in ein digitales Sprachsignal 3 umgewandelt. Eine Auswerteschaltung 4, die im Ausführungsbeispiel durch einen Signalprozessor mit einem Speicher realisiert ist, ermittelt aus dem digitalen Sprachsignal 3 ein Erkennungssignal 5, welches in einem geeigneten Datenformat Informationen über die im digitalen Sprachsignal 3 erkannten Wörter enthält. Das Erkennungssignal 5 bildet die Grundlage für eine weiterführende Verarbeitung, wie z.B. der Auslösung von Handlungen (Steuerung von Geräten) oder der Ausgabe einer Antwort durch eine Spracherzeugung (Dialogauskunftssystem). Die Schaltungsanordnung kann selbstverständlich in alle gängigen Systeme eingebracht werden, in denen die Erkennung von einzelnen Wörtern oder eine kontinuierliche Spracherkennung vorgesehen ist. Eine Auflistung von Anwendungsmöglichkeiten einer Schaltungsanordnung zur Spracherkennung ist z.B. in dem Buch "Sprachverarbeitung und Sprachübertragung" von K. Fellbaum, Berlin, Springer Verlag, 1984, Seite 204 zu finden.

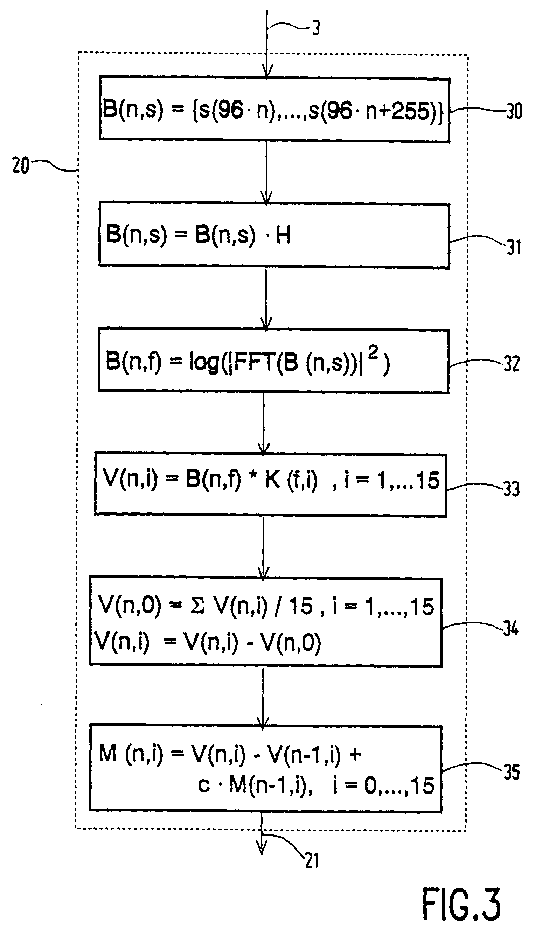

Fig. 2 verdeutlicht anhand eines Flußdiagramms die in der Auswerteschaltung 4 von Fig.1 vorgesehenen Schritte zur Erzeugung des Erkennungssignals 5. Dabei sind gleiche Teile mit den gleichen Bezugszeichen versehen. Die Auswerteschaltung 4 wird im Ausführungsbeispiel durch einen Signalprozessor mit einem Speicher gebildet, der entsprechend den Flußablaufdiagrammen von Fig.2 und Fig.3 programmiert ist. Aus dem digitalen Sprachsignal 3 werden mit Hilfe einer Merkmalsextraktion (Block 20), deren Schritte in Fig.3 detailliert beschrieben werden, spektrale Merkmalsvektoren 21 gewonnen.

In der Auswerteschaltung 4 werden durch eine Verzweigung 22 die zwei Betriebsarten "Training" und "Testphase" unterschieden. Bevor eine Erkennung von Wörtern des digitalen Sprachsignals 3 möglich ist, muß die Schaltungsanordnung während des Trainings zunächst mit den Worten trainiert werden, die später während der Testphase erkannt werden sollen. Während des Trainings wird jedes zu trainierende Wort mehrmals aufgenommen und der Schaltungsanordnung zugeführt. Bei jedem Aufnahmevorgang wird eine Merkmalsextraktion (Block 20) vorgenommen und die resultierenden, für das trainierte Wort spezifischen spektralen Merkmalsvektoren 21 einem Trainingsblock (Block 23) zugeführt. Im Trainingsblock (Block 23) werden aus den, aus mehreren Aufnahmen stammenden Merkmalsvektoren in bekannter Weise eine Reihe von wortspezifischen Referenz-Merkmalsvektoren gebildet, die anschließend abgespeichert (Block 24) werden. Nach Abschluß des Trainings beinhaltet der Speicher für jedes trainierte Wort Referenz-Merkmalsvektoren, auf die während einer Erkennung (Block 25) in der Testphase zugegriffen wird.

In der Testphase wird, wie im Training, für das zu erkennende digitale Sprachsignal 3 eine Merkmalsextraktion (Block 20) vorgenommen. Die resultierenden spektralen Mermalsvektoren 21 werden nun jedoch über die Verzweigung 22 der Erkennung (Block 25) zugeführt. Die Erkennung (Block 25) führt einen Vergleich der spektralen Merkmals-vektoren 21 mit den abgespeicherten (Block 24) Referenz-Merkmalsvektoren durch und liefert ein Erkennungssignal 5, daß das Erkennungsergebnis in geeigneter Form wiedergibt und das Ausgangssignal der Schaltungsanordnung zur Spracherkennung darstellt.

Aufbau, Abläufe bzw. Funktionsweise des Trainingsblocks (Block 23), die Abspeicherung der Referenz-Merkmalsvektoren (Block 24) sowie der Erkennung (Block 25) sind bekannt aus der Veröffentlichung "Verfahren für Freisprechen, Spracherkennung und Sprachcodierung in der SPS51" von W. Armbrüster, S. Dobler und P. Meyer, PKI Technische Mitteilungen 1/1990, Seiten 35-41 und/oder aus den Druckschriften "The Use of a One-Stage Dynamic Programming Algorithm for Connected Word Recognition" von H. Ney , IEEE Transactions ASSP, Vol. ASSP-32, No. 2, April 1984, Seiten 263-271 und "Speaker-dependent connected-speech recognition via dynamic programming and statistical methods" von H.Boulard et al., in K. Kohler, Bibliotheca Phonetica, (Karger, Basel), No.12, 1985, Seiten 115-148.

Fig. 3 zeigt ein Flußablaufdiagramm der Merkmalsextraktion, wie sie in der Auswerteschaltung der Schaltungsanordnung zur Spracherkennung vorgesehen ist. In Fig. 3 werden anhand eines Flußablaufdiagramms die notwendigen Schritte für eine Merkmalsextraktion (vgl. Block 20, Fig. 2), wie sie in der Auswerteschaltung 4 der Schaltungsanordnung 6 zur Spracherkennung vorgesehen ist, näher erläutert.

Das digitale Sprachsignal 3 wird zunächst in sich überlappende, aus jeweils 256 Abtastwerten bestehende Zeitrahmen gemäß der Vorschrift (Block 30):

$$B(n, s) = \{ s(96 \cdot n), ..., s(96 \cdot n + 255) \}$$

aufgeteilt, wobei n einen Zeitrahmen, s die Abtastwerte des digitalen Sprachsignals 3 und $B(n, s)$ die 256 zu einem Zeitrahmen n gehörenden Abtastwerte s bezeichnet. Die Vorschrift besagt, daß jeder Zeitrahmen n aus 256 aufeinanderfolgenden Abtastwerten s des digitalen Sprachsignals 3 besteht, wobei jeweils nach 96 Abtastwerten ein neuer Zeitrahmen gebildet wird, so daß sich die Zeitrahmen überlappen. Da die Abtastung mit einer Rate von 8 KHz erfolgt, wird alle 96/8000 s = 12 ms ein neuer Zeitrahmen gebildet, der 256 Abtastwerte enthält. Wie Block 31 zeigt, wird jeder Zeitrahmen anschließend einer Wichtung mit einem Hamming-Fenster unterworfen , wie es z.B. aus dem Buch "Automatische Spracheingabe und Sprachausgabe" von K. Sickert, Haar bei München, Verlag Markt und Technik, 1983, Seite 119, bekannt ist. Dazu wird eine Multiplikation mit einem Vektor H, der die Koeffizienten des Hamming-Fensters enthält, gemäß

$$B(n, s) = B(n, s) \cdot H$$

vorgenommen. Nach der Wichtung mit dem Hamming-Fenster (Block 31) wird für jeden Zeitrahmen n ein logarithmiertes Leistungsdichtespektrum ermittelt (Block 32), in dem durch eine schnelle Fouriertransformation (FFT) ein komplexes Spektrum des Zeitrahmens n berechnet und daraus durch Bildung eines Betragsquadrates die Leistungsdichtespektren $B(n, f)$, wobei f die Frequenz bezeichnet, ermittelt werden. Durch Logarithmierung der Leistungsdichtespektren $B(n, f)$ resultieren die logarithmierten Leistungsdichtespektren $B(n, f)$ der Zeitrahmen. Die logarithmierten Leistungsdichtespektren $B(n, f)$ werden somit gemäß der Vorschrift

$$B(n, f) = \log(|FFT( B(n, s))|^2 )$$

ermittelt, wobei B(n, s) die mit dem Hamming-Fenster gewichteten Abtastwerte eines Zeitrahmens n und FFT symbolisch die schnelle Fouriertransformation bezeichnet. Eine solche Bestimmung der logarithmierten Leistungsdichtespektren der Zeitrahmen ist z. B. aus der Veröffentlichung "Verfahren für Freisprechen, Spracherkennung und Sprachcodierung in der SPS51" von W. Armbrüster, S. Dobler und P. Meyer, PKI Technische Mitteilungen 1/1990, Seiten 35-41 bekannt.

Die resultierenden logarithmierten Leistungsdichtespektren B(n, f) der Zeitrahmen enthalten jeweils 256 spektrale Werte. Durch Faltung der logarithmierten Leistungsdichtespektren der Zeitrahmen mit 15 Faltungskernen K (f, i) gemäß

$$V(n, i) = B(n, f) * K(f, i) \text{ mit } i = 1,..., 15$$

wobei V(n, i) einen spektralen Merkmalsvektor, n den Zeitrahmen, "*" das Symbol für die Faltungsoperation und i eine Komponente des spektralen Merkmalsvektors V(n, i) bezeichnet, erhält man für jeden Zeitrahmen n einen spektralen Merkmalsvektor V(n, i). Die Faltungskerne sind, wie dies bereits in der Beschreibungseinleitung beschrieben wurde, so gewählt, daß sie bei der Faltung fünfzehn auf der "mel"-Skala gleichverteilte Spektralwerte aus den Leistungsdichtespektren der Zeitrahmen extrahiert werden, die zusammen die Komponenten eines spektralen Merkmalsvektors V(n, i) bilden. Die in Block 33 vorgenommene Faltung und die anschließende Zusammenfassung der resultierenden Komponenten zu einem spektralen Merkmalsvektor V (n, i) führt zu einer erheblichen Datenreduktion und vereinfacht die spätere Erkennung.

Wie Block 34 zeigt, wird für jeden spektralen Merkmalsvektor V(n, i) die mittlere Energie V(n, 0) gemäß

$$V(n, 0) = \Sigma V(n, i) / 15 , i = 1, ..., 15$$

bestimmt und als Komponente i = 0 in den spektralen Merkmalsvektor V(n, i) aufgenommen. Zudem wird die mittlere Energie V(n, 0) von jeder Komponente i = 1, ..., 15 eines spektralen Merkmalsvektors subtrahiert. Dies entspricht einer Normierung der spektralen Merkmalsvektoren auf die mittlere Energie gemäß der Vorschrift:

$$V(n, i) = V(n, i) - V(n, 0) , i = 1,..., 15$$

Es resultiert für jeden Zeitrahmen ein aus 16 Komponenten bestehender spektraler Merkmalsvektor V(n, i).

Anschließend ist für die spektralen Merkmalsvektoren V(n, i) eine rekursive Hochpaßfilterung gemäß der Vorschrift

$$M(n, i) = V(n, i) - V(n-1, i) + C \cdot M(n-1, i)$$

vorgesehen, wobei M(n, i) die hochpaßgefilterten spektralen Merkmalsvektoren, V(n - 1, i) die spektralen Merkmalsvektoren des Zeitrahmens n - 1, M(n - 1, i) die hochpaßgefilteren spektralen Merkmalsvektoren des Zeitrahmens n - 1, und C eine vorgegebene Konstante bezeichnet. Für die Konstante C wird ein Wert von ungefähr 0,7 gewählt. Die resultierenden spektralen Merkmals-vektoren M(n, i) bilden die der weiteren Verarbeitung zugrundeliegenden Merkmalsvektoren 21.

## Patentansprüche

1. Schaltungsanordnung (6) zur Spracherkennung mit einer Auswerteschaltung (4) zur Ermittlung von spektralen Merkmals-Vektoren (21) von Zeitrahmen eines digitalen Sprachsignals (3) mittels einer Spektralanalyse, zur Logarithmierung (32) der spektralen Merkmalsvektoren (21) und zum Vergleich der logarithmierten spektralen Merkmalsvektoren (21) mit Referenz-Merkmalsvektoren (26), dadurch gekennzeichnet, daß vor dem Vergleich mit den Referenz-Merkmalsvektoren (26) in der Auswerteschaltung (4) eine rekursive Hochpaßfilterung (35) der spektralen Merkmalsvektoren (21) durch Berechnung hochpaßgefilterter spektraler Merkmals-vektoren M(n, i) gemäß der Vorschrift

$$M(n, i) = V(n, i) - V(n-1, i) + C \cdot M(n-1, i)$$

vorgesehen ist, wobei V(n, i) die ungefilterten spektralen Merkmalsvektoren, n einen Zeitrahmen, i eine spektrale Komponente eines spektralen Merkmalsvektors M bzw. V und C eine vorgegebene Konstante bezeichnet.

2. Schaltungsanordnung nach Anspruch 1, dadurch gekennzeichnet, daß für die Konstante C ein Wert im Bereich von 0 < C < 1 gewählt wird.

3. Schaltungsanordnung nach einem der vorhergehenden Ansprüche, dadurch gekennzeichnet, daß die in der Auswerteschaltung (4) vorzunehmende Spektralanalyse eine Aufteilung (30) des digitalen Sprachsignals (3) in sich überlappende Zeitrahmen, eine nachfolgende Wichtung (31) der Abtastwerte eines Zeitrahmens mit einem Hamming-Fenster, eine schnelle Fouriertransformation (32) mit einer anschließenden Betragsbildung zur Ermittlung von spektralen Merkmalsvektoren (21) vorsieht.

**4.** Schaltungsanordnung nach Anspruch 3,
<u>dadurch gekennzeichnet</u>,
daß die Auswerteschaltung (4) zur Reduzierung der Zahl von Komponenten der spektralen Merkmalsvektoren (21) durch eine Faltung (33) mit Faltungskernen eingerichtet ist.

**5.** Schaltungsanordnung nach Anspruch 4,
<u>dadurch gekennzeichnet</u>,
daß in der Auswerteschaltung (4) die Logarithmierung (32) der spektralen Merkmalsvektoren (21) bei einer auf der schnellen Fouriertransformation basierenden Spektralanalyse vor der Faltung (33) vorgesehen ist.

**6.** Schaltungsanordnung nach einem der vorhergehenden Ansprüche,
<u>dadurch gekennzeichnet</u>,
daß die Auswerteschaltung (4) vor der rekursiven Hochpassfilterung (35) zur Intensitätsnormierung (34) der spektralen Merkmalsvektoren (21) bestimmt ist.

## Claims

**1.** A circuit arrangement (6) for speech which includes an evaluation circuit (4) for determining spectral feature vectors (21) of time frames of a digital speech signal (3) by means of a spectral analysis, for logarithmizing (32) the spectral feature vectors (21), and for comparing the logarithmized spectral feature vectors (21) with reference feature vectors (26), <u>characterized in that</u> prior to the comparison with the reference feature vectors (26) recursive high-pass filtering (35) of the spectral feature vectors is carried out in of the evaluation circuit (4) by calculation of high-pass filtered spectral feature vectors M(n, i) in conformity to the rule:

$$M(n, i) = V(n, i) - V(n-1, i) + C \cdot M(n-1, i)$$

in which V(n, i) represents the non-filtered spectral feature vectors, n is a time frame, i represents a spectral component of a spectral feature vector M or V, and C is a given constant.

**2.** A circuit arrangement as claimed in Claim 1, <u>characterized in that</u> a value in the range $0 < C < 1$ is chosen for the constant C.

**3.** A circuit arrangement as claimed in one of the preceding Claims,
<u>characterized in that</u> the spectral analysis to be performed in the evaluation circuit (4) includes a subdivision (30) of the digital speech signal (3) into overlapping time frames, a subsequent weighting (31) of the sample values of a time frame by means of a Hamming window, and a fast Fourier transformation (32) with subsequent formation of an absolute value so as to determine spectral feature vectors (21).

**4.** A circuit arrangement as claimed in Claim 3, <u>characterized in that</u> the evaluation circuit (4) is arranged to reduce the number of components of the spectral feature vectors (21) by convolution (33) with convolution centres.

**5.** A circuit arrangement as claimed in Claim 4, <u>characterized in that</u> the logarithmization (32) of the spectral feature vectors (21) is carried out in the evaluation circuit (4) in a spectral analysis based on the fast Fourier transformation, prior to the convolution (33).

**6.** A circuit arrangement as claimed in one of the preceding Claims,
<u>characterized in that</u>
the evaluation circuit (4) is arranged so as to carry out intensity standardization (34) of the spectral feature vectors (21) prior to the recursive high-pass filtering (35).

## Revendications

**1.** Agencement de circuit (6) de reconnaissance vocale avec un circuit d'évaluation (4) en vue de la détermination de vecteurs caractéristiques spectraux (21) de cadres temporels d'un signal vocal numérique (3) à l'aide d'une analyse spectrale, en vue du calcul logarithmique (32) des vecteurs caractéristiques spectraux (21) et de la comparaison des vecteurs caractéristiques spectraux logarithmés (21) avec des vecteurs caractéristiques de référence (26),
caractérisé en ce qu'avant la comparaison avec les vecteurs caractéristiques de référence (26) dans le circuit d'évaluation (4), un filtrage passe-haut récursif (35) des vecteurs caractéristiques spectraux (21) est prévu par calcul des vecteurs caractéristiques spectraux M(n,i) après filtrage passe-haut conformément à l'équation :

$$M(n,i) = V(n,i) - V(n-1,i) + C \cdot M(n-1, i)$$

V(n,i) représentant les vecteurs caractéristiques spectraux non filtrés, n un cadre temporel, i une composante spectrale d'un vecteur caractéristique spectral M ou V et C une constante prédéterminée.

**2.** Agencement de circuit selon la revendication 1, caractérisé en ce qu'une valeur de l'ordre $0 < C < 1$

est choisie pour la constante C.

3. Agencement de circuit selon l'une des revendications précédentes, caractérisé en ce que l'analyse spectrale à effectuer dans le circuit d'évaluation (4) prévoit une répartition (30) du signal vocal numérique (3) en cadres temporels se chevauchant, une pondération consécutive (31) des valeurs de balayage d'un cadre temporel avec une fenêtre de Hamming, une transformation de Fourier rapide (32) avec un calcul consécutif de valeur en vue de la détermination des vecteurs caractéristiques spectraux (21).

4. Agencement de circuit selon la revendication 3, caractérisé en ce que le circuit d'évaluation (4) est organisé en vue de la réduction du nombre de composantes des vecteurs caractéristiques spectraux (21) par une convolution (33) avec des noyaux de convolution.

5. Circuit selon la revendication 4, caractérisé en ce que le calcul logarithmique (32) des vecteurs caractéristiques spectraux (21) est prévu dans le circuit d'évaluation (4) en cas d'analyse spectrale basée sur une transformation de Fourier rapide avant la convolution (33).

6. Circuit selon l'une des revendications précédentes, caractérisé en ce que le circuit d'évaluation (4) est déterminé avant le filtrage passe-haut récursif (35) en vue de la normalisation de l'intensité (34) des vecteurs caractéristiques spectraux (21).

FIG.1

FIG.2

3

$$B(n,s) = \{s(96 \cdot n),...,s(96 \cdot n+255)\}$$  — 30

$$B(n,s) = B(n,s) \cdot H$$  — 31

$$B(n,f) = \log(|FFT(B(n,s))|^2)$$  — 32

$$V(n,i) = B(n,f) * K(f,i) \quad , \; i = 1,...15$$  — 33

$$V(n,0) = \Sigma\, V(n,i)\,/\,15 \; , \; i = 1,...,15$$
$$V(n,i)\; = V(n,i) - V(n,0)$$  — 34

$$M(n,i) = V(n,i) - V(n-1,i) +$$
$$c \cdot M(n-1,i), \quad i = 0,...,15$$  — 35

20

21

FIG.3